# EUROPEAN PATENT SPECIFICATION

(11) **EP 0 519 129 B1**
(45) Date of publication and mention of the grant of the patent: **15.03.1995**
(21) Application number: 91305508.3
(22) Date of filing: 18.06.1991
(51) Int. Cl.: F16L 37/28

(54) **Pipe coupling used with automatic connecting and disconnecting device**
Rohrverbindung und ihre Verwendung bei einer automatischen Trenn- und Verbindungsvorrichtung
Raccord pour tuyaux utilisé avec un dispositif automatique de montage et de démontage

(43) Date of publication of application: 23.12.1992
(73) Proprietor: NIPPON AIR BRAKE KABUSHIKI KAISHA, Chuoh-ku, Kobe (JP)
(72) Inventor: Onishi, Toshihiki, Kakagawa-shi, Hyogo-ken (JP); Tomioka, Katsumi, Nishi-ku, Kobe (JP)
(74) Representative: Goodenough, Nigel

(56) References cited:
- DE-A- 3 904 098
- FR-A- 2 147 482
- US-A- 2 463 326
- US-A- 3 500 859
- US-A- 4 903 730

## Description

This invention relates to a pipe coupling used with an automatic connecting and disconnecting device for hydraulic and pneumatic pipings for general industrial machinery, such as disclosed in U.S. Patent No. 3,774,636.

U.S. Patent No. 4,903,730 discloses a pipe coupling of this type as described below with reference to Figure 1 of the accompanying drawings. This coupling comprises a first main body 2 fixed to a stationary face plate 1 and a second main body 4 fixed to a movable face plate 3. The first main body 2 is cylindrical in shape and has a joint mouth 5 in its front end face and a pipe joint (6) at its rear end. The second main body 4 has a front end portion having an outer diameter fitting in the joint mouth 5 and includes a second valve hole 8 in its front end face 7 and a pipe joint 9 at its rear end. The first and second main bodies 2 and 4 have a common axis when they are fixed to the respective face plates 1 and 3 and the second main body 4 is adapted to move close to and apart from the first main body 2 along the axis with movement of the movable face plate 3. The first main body 2 encloses therein a valve seat 10 freely sliding along the same axis.

The valve seat 10 is urged by a first spring 12 toward the joint mouth 5 and has an annular projection at its rear end which butts against an annular step 13 of the first main body 2. The valve seat 10 has a circular hole 35 formed in its front end face and a tubular third check valve 31 is slidably and fluid-tightly fit in this hole 35. The inner hole of the third check valve 31 constitutes a first valve hole 11 and a valve seat 36 is formed near its front end and adapted to be closed by a first check valve 14 which is fixedly supported by a central connecting rod 18 fixed to the first main body 2. The third check valve 31 is urged forward by a spring 40 disposed between an annular projection 37 formed on its outer surface and a spring seat 39 fit in an inner hole 38 of the valve seat 10 to close a gap between the valve seat 10 urged by the first spring 12 into its advance position and the first check valve 14 in its original position. Numeral 41 denotes a holding ring fitting in the inner hole 38 of the valve seat 10 and butting against the spring seat 39. It has through holes 42 and a central hole in which the connecting rod 18 fits slidably.

The second main body 4 includes therein a second check valve 20 of a greater diameter than the first check valve 14, which is adapted to be pushed by a second spring 19 to close the second valve hole 8 from its inside. An annular sealing member 21 is disposed on the front face of the valve seat 10 to face the front end face of the second main body 4. The sealing member 21 is adapted to enclose the first and second valve holes 11 and 8 when the front end face 7 of the second main body 4 butts against the front face of the valve seat 10 into a connected state of the coupling.

The reason why the third check valve 31 is disposed between the valve seat 10 and the first check valve 14 in the abovementioned structure of the first main body 2 is that it is practically impossible to put the valve seat 10 in contact with both the annular step 13 and the first check valve 14 at the same time and, if only the valve seat 10 contacts the first check valve 14, this check valve structure may be broken by a high fluid pressure acting to the valve seat 10, while the fluid pressure acting on the third check valve 31 is much lower due to its small cross sectional area.

However, the abovementioned prior art pipe coupling has such a disadvantage in that its size is unnecessarily large due to addtion of the third check valve 31 when the coupling is used at a relatively low flow rate, since it is preferable to reduce the outer diameter of the coupling to make its overall size as small as possible.

A pipe coupling is proposed in DE-A-3904098 which comprises; a cylindrical first main body having a connection opening in a front end face thereof and an inner hole connecting with said connection opening; a second main body having a front end portion of an outer diameter which can loosely fit in said connection opening and a second valve hole in a front end face thereof, said first and second main bodies being arranged to face each other and to allow mutual approaching and departing movement; a valve seat which is slidably mounted in said inner hole of the first main body and is urged by a first spring toward said connection opening, the valve seat having a first valve hole in a front end face thereof; a first check valve having a diameter smaller than that of said second valve hole and being adapted to close said first valve hole from the outside thereof; a second check valve mounted in said second main body and urged by a second spring to close said second valve hole from the inside thereof; and an annular sealing member attached to the front end face of one of said valve seat of the first main body and said front end portion of the second main body for forming an annular tight sealing zone in a connected state of said coupling, wherein said inner hole of said first main body is separated by a first step into a first portion connecting with said connection opening and a second portion having an inner diameter smaller than said first portion, and the outer surface of said valve seat is separated by a second step into a front end portion loosely fitting in said first portion of said inner hole and a rear guide portion slidably fitting in said second portion of said inner hole, thereby forming an air cavity between said first and second steps.

Whilst such a coupling can be manufactured to avoid, at least in part, the problems with US-A-4903730 referred to above, the pipe coupling of DE-A-3904098 does not allow any discrepancy between the axes of the first main body and the second main body as the main bodies are moved towards each other to effect coupling. Such discrepancies in alignment of the axes are liable to occur due to structural inaccuracies in the machine parts to which the main bodies are connected and are particularly likely to occur in multiplex assemblies utilising automatic coupling and disconnecting of the device.

The present invention is characterised in that said first portion of the inner hole of the first main body has an inner diameter greater than the outer diameter of said front end portion of the second main body and said second valve hole has an inner diameter correspondingly greater than the outer diameter of said first check valve, thereby allowing eccentricity between said first and second main bodies at the time of connection thereof.

The invention will be better understood from the following description of a preferred embodiment thereof, given by way of example only, reference being had to the accompanying drawings wherein:
Figure 1 is a partially sectional side view representing an example of the prior art pipe coupling in its disconnected state;
Figure 2 is a partially sectional side view representing an embodiment of the pipe coupling according to this invention, which is in its disconnected state; and
Figure 3 is a partially sectional side view representing the embodiment of Figure 2 in its connected state.

Throughout the drawings, same reference numerals are given to corresponding structural components.

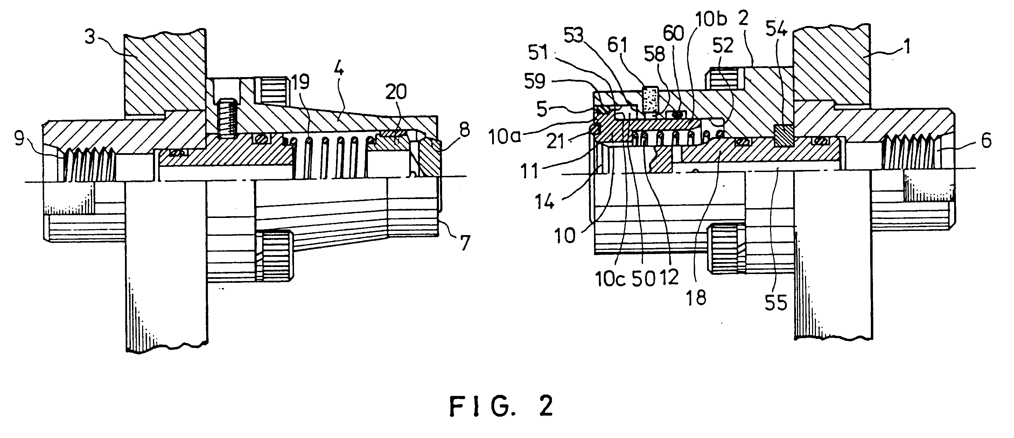

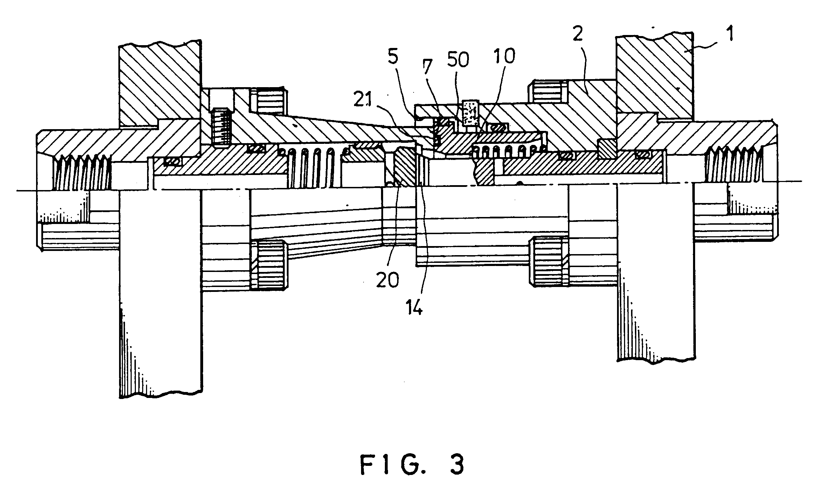

Referring to Figures 2 and 3, the pipe coupling of this embodiment is composed of a first main body 2 fixed to a stationary face plate 1 and a second main body 4 fixed to a movable face plate 3.

The first main body 2 has a joint mouth 5 in its front end face and an inner hole 50 which is separated into first and second portions 51 and 52 by a step 53. The first portion 51 has an inner diameter which is equal to that of the joint mouth 5 and is larger than the outer diameter of the front end portion of the second main body 4 for allowing their loose fit, while the second portion 52 has an inner diameter sufficiently smaller than that of the first portion 51. A tubular valve seat 10 is inserted in the inner hole 50 of the first main body 2 and the outer surface of the valve seat 10 is separated into a front end portion 10a and a rear guide portion 10b by a step 10c. The front end portion 10a fits loosely in the first portion 51 and has a substantial gap therebetween in which an air permeable dust ring 59 is disposed, while the rear guide portion 10b slidably fits in the second portion 52 and a sealing ring 60 is disposed therebetween. The valve seat 10 is provided with a central hole 11 as a first valve hole and urged by a first spring 12 toward the joint mouth 5. An annular sealing member 21 is disposed on the front end face of the valve seat 10 and the inner diameter of the sealing member 21 is selected a little less than the outer diameter of the rear guide portion 10b of the valve seat 10 and the inner diameter of the second portion 52 of the inner hole 50. A first check valve 14 is disposed in the first valve hole 11 for closing it from the outside thereof and fixed to a valve shaft 18 which is fixed to the first main body 2 by a key 54 and has a central passageway 55. The valve seat 10 urged by the first spring 12 is inhibited from coming out of the joint mouth 5 by the valve shaft 18 through the first check valve 14. The inner hole 50 of the first main body 2 has an annular margin cavity formed between the steps 10c and 53 for allowing free forward and backward movement of the valve seat 10 and the cavity is connected to the external atmosphere through a ventilation hole 58 having a filter 61 for preventing invasion of dust and lint through the hole 58.

The second main body 4 is substantially same in structure as that of the above-mentioned prior art pipe coupling. More particularly, it encloses therein a second check valve 20 having a greater diameter than the first check valve 14 and being urged by a second spring 19 for closing a second valve hole 8 from its inside. The inner diameter of the second valve hole 8 is greater enough than the outer diameter of the first check valve 14 for insuring sufficient loose fit therebetween. This loose fit allows, together with the above-mentioned loose fit between the joint mouth 5 of the first main body 2 and the front end portion of the second main body 4, substantial discrepancy between the axes of the first and second main bodies 2 and 4 due to a structural error which is often caused in a conventional multiplex coupling assemby as aforementioned.

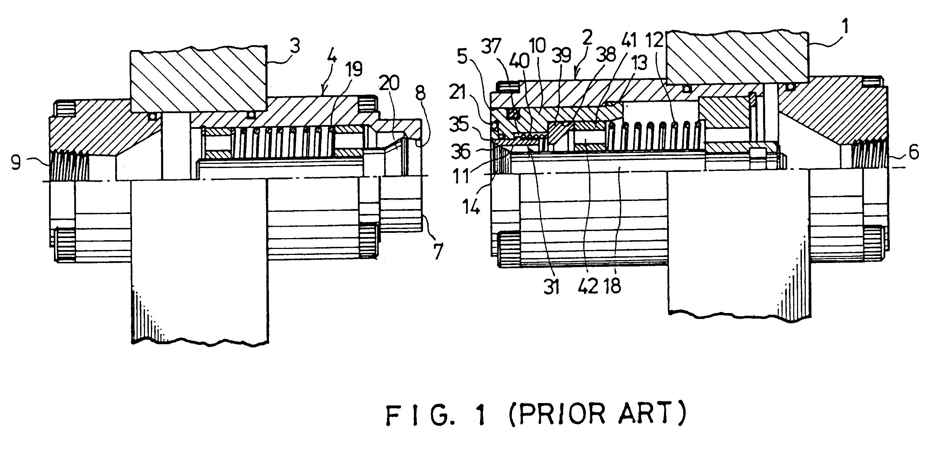

When the pipe coupling having the above-mentioned structure is in its disconnected state as shown in Figure 2, high fluid pressure retained in the first main body 2 acts on the valve seat 10 and urges it against the first check valve 14. Therefore, the valve seat 10 is urged against the first check valve 14 by a thrust force attributalble to the fluid pressure and a spring force of the first spring 19. As is readily understood from comparison of Figures 1 and 2, the stepped structure of the valve seat 10 results in significant reducton in the effective pressure receiving area of the valve seat 10 and corresponding reduction in the hydraulic thrust force acting on the valve seat 10. This not only attains the aforementioned object of invention, but also results in substantial reduction in the mechanical force required for connecting the coupling, in combination with the above-mentioned discrepancy allowing feature.

In the connected state of this pipe coupling as shown in Figure 3, the valve seat 10 is also subjected to a fluid pressure counteracting on part of its front face which is enclosed by the annular sealing member 21. Although the thrust force attributalble to this pressure urges the valve seat 10 backwards, it is less than the forward thrust force backed up by the first spring 12, since the inner diameter of the sealing member 12 is selected a little less, at least not greater, than the outer diameter of the rear guide portion 10b of the valve seat 10. Consequently, the fluid pressure acting on the valve seat 10 still produces, as a whole, a forward thrust force which serves to urge the annular sealing member 21 against the front face 7 of the second main body 4 to keep fluid-tightness therebetween.

As described above, the above mentioned stepped structure of the valve seat 10 can substantially reduce a hydraulic or pneumatic forward thrust acting thereon to prevent mechanical damage of the coupling elements and also reduce a force required for connecting the coupling. Moreover, this structure results in substantial increase in the front surface area of the valve seal 10 and facilitates to provide a coupling margin or clearance between the first and second main bodies, thereby allowing some discrepancy of the axes of both bodies in connecting operation and further reducing the force required for connection.

## Claims

1. A pipe coupling comprising; a cylindrical first main body (2) having a connection opening (5) in a front end face thereof and an inner hole (50) connecting with said connection opening; a second main body (4) having a front end portion of an outer diameter which can loosely fit in said connection opening (5) and a second valve hole (8) in a front end face thereof, said first and second main bodies being arranged to face each other and to allow mutual approaching and departing movement; a valve seat (10) which is slidably mounted in said inner hole (50) of the first main body (2) and is urged by a first spring (12) toward said connection opening, the valve seat (10) having a first valve hole (11) in a front end face thereof; a first check valve (14) having a diameter smaller than that of said second valve hole (8) and being adapted to close said first valve hole (11) from the outside thereof; a second check valve (20) mounted in said second main body (4) and urged by a second spring (19) to close said second valve hole (8) from the inside thereof; and an annular sealing member (21) attached to the front end face of one of said valve seat (10) of the first main body (2) and said front end portion of the second main body (4) for forming an annular tight sealing zone in a connected state of said coupling, wherein said inner hole (50) of said first main body (2) is separated by a first step (53) into a first portion (51) connecting with said connection opening (5) and a second portion (52) having an inner diameter smaller than said first portion, and the outer surface of said valve seat (10) is separated by a second step (10c) into a front end portion (10a) loosely fitting in said first portion (51) of said inner hole (50) and a rear guide portion (10b) slidably fitting in said second portion (52) of said inner hole, thereby forming an air cavity between said first (53) and second (10c) steps, characterised in that said first portion (51) of the inner hole (50) of the first main body has an inner diameter greater than the outer diameter of said front end portion of the second main body (4) and said second valve hole (8) has an inner diameter correspondingly greater than the outer diameter of said first check valve (14), thereby allowing eccentricity between said first and second main bodies at the time of connection thereof.

2. A pipe coupling as set forth in claim 1, characterized in that the inner diameter of said second portion (52) of said inner hole (50) is approximately equal to but not smaller than the inner diameter of said annular sealing member (21), and the inner diameter of said sealing member (21) is approximately equal to the inner diameter of said first valve hole (11).

3. A pipe coupling as set forth in claim 1 or 2, characterized in that a dust sealing ring (59) is inserted in a gap between the first portion (51) of said inner hole (50) and the front end portion (10a) of said valve seat (10).

4. A pipe coupling as set forth in claim 1, 2 or 3, characterized in that said first main body (2) further comprises an air passageway (58) connecting said air cavity to the external atmosphere, and an air filter (61) is disposed in said passageway (58).

5. A pipe coupling as set forth in claim 3 or 4, characterized in that said dust sealing ring (59) is air-permeable.

## Patentansprüche

1. Rohrleitungsverbindung die aufweist; ein zylindrisches, erstes Hauptgehäuse (2), das eine Verbindungsöffnung (5) in einer vorderen Endfläche davon und eine innere Öffnung (50), die mit der Verbindungsöffnung verbunden ist, besitzt; ein zweites Hauptgehäuse (4), das einen vorderen Endabschnitt eines Außendurchmessers besitzt, der lose in die Verbindungsöffnung (5) paßt, und eine zweite Ventilöffnung (8) in einer vorderen Endfläche davon, wobei das erste und das zweite Hauptgehäuse so angeordnet sind, daß sie zueinander gerichtet sind und eine gegenseitige, sich annähernde und entfernende Bewegung ermöglichen; einen Ventilsitz (10), der gleitend in der inneren Öffnung (50) des ersten Hauptgehäuses (2) befestigt ist und durch eine erste Feder (12) zu der Verbindungsöffnung hin gedrückt wird, wobei der Ventilsitz (10) eine erste Ventilöffnung (11) in einer vorderen Endfläche davon besitzt; ein erstes Absperrventil (14), das einen Durchmesser besitzt, der kleiner als derjenige der zweiten Ventilöffnung (8) ist und dazu geeignet ist, die erste Ventilöffnung (11) von der Außenseite davon zu schließen; ein zweites Absperrventil (20), das in dem zweiten Hauptgehäuse (4) befestigt ist und durch eine zweite Feder (19) gedrückt wird, um die zweite Ventilöffnung (8) von der Innenseite davon zu schließen; ein ringförmiges Dichtungsteil (21), das an der vorderen Endfläche eines der Ventilsitze (10) des ersten Hauptgehäuses (2) und des vorderen Endabschnitts des zweiten Hauptgehäuses (4) zur Bildung einer ringförmigen, dichten Dichtungszone in einem verbundenen Zustand der Verbindung befestigt ist, wobei die innere Öffnung (50) des Hauptgehäuses (2) durch eine erste Abstufung (53) in einem ersten Abschnitt (51) gedrängt wird, der sich mit der Verbindungsöffnung (5) verbindet, und einem zweiten Abschnitt (52), der einen Innendurchmesser besitzt, der kleiner als der erste Abschnitt ist, und die Außenoberfläche des Ventilsitzes (10) wird durch eine zweite Abstufung (10c) in einen vorderen Endabschnitt (10a), der lose in dem ersten Abschnitt (51) der inneren Öffnung (50) eingepaßt befestigt ist, und einen hinteren Führungsabschnitt (10d) der gleitend in dem zweiten Abschnitt (52) der inneren Öffnung eingepaßt befestigt ist, getrennt, wodurch ein Lufthohlraum zwischen der ersten (53) und der zweiten (10c) Abstufung gebildet wird, dadurch gekennzeichnet, daß der erste Abschnitt (51) der inneren Öffnung (50) des ersten Hauptgehäuses einen Innendurchmesser größer als der Außendurchmesser des vorderen Endabschnitts des zweiten Hauptgehäuses (4) besitzt und die zweite Ventilöffnung (8) einen Innendurchmesser entsprechend größer als der Außendurchmesser des ersten Absperrventils (14) besitzt, wodurch eine Exzentrizität zwischen dem ersten und dem zweiten Hauptgehäuse zu dem Zeitpunkt der Verbindung davon ermöglicht wird.

2. Rohrleitungsverbindung nach Anspruch 1, dadurch gekennzeichnet, daß der Innendurchmesser des zweiten Abschnitts (52) der inneren Öffnung (50) ungefähr gleich zu, allerdings nicht kleiner, als der Innendurchmesser des ringförmigen Dichtungsteils (21) ist und der Innendurchmesser des Dichtungsteils (21) ungefähr gleich dem Innendurchmesser der ersten Ventilöffnung (11) ist.

3. Rohrleitungsverbindung nach Anspruch 1 oder 2, dadurch gekennzeichnet, daß ein Staubdichtungsring 59 in einem Spalt zwischen dem ersten Abschnitt (51) der inneren Öffnung (50) und dem vorderen Endabschnitt (10a) des Ventilsitzes (10) eingesetzt ist.

4. Rohrleitungsverbindung nach Anspruch 1, 2 oder 3, dadurch gekennzeichnet, daß das erste Hauptgehäuse (2) weiterhin einen Luftdurchgangsweg (58) aufweist, der den Lufthohlraum zu der Außenatmosphäre hin verbindet, und ein Luftfilter (61) in dem Durchgangsweg (58) angeordnet ist.

5. Rohrleitungsverbindung nach Anspruch 3 oder 4, dadurch gekennzeichnet, daß der Staubdichtungsring (59) luftpermeabel ist.

## Revendications

1. Raccord de canalisation comprenant : un premier corps principal cylindrique (2) ayant une ouverture de raccordement (5) dans sa face d'extrémité avant et un perçage intérieur (50) qui est en communication avec ladite ouverture de raccordement ; un deuxième corps principal (4) ayant une portion d'extrémité avant d'un diamètre extérieur qui peut s'ajuster avec jeu dans ladite ouverture de raccordement (5), et un deuxième perçage de clapet (8) dans sa face d'extrémité, lesdits premier et deuxième corps principaux étant agencés pour se faire mutuellement face et pour permettre un mouvement réciproque de rapprochement et d'écartement ; un siège de clapet (10) qui est monté coulissant dans ledit perçage intérieur (50) du premier corps principal (2) et est poussé par un premier ressort (12) vers ladite ouverture de raccordement, le siège de clapet (10) ayant un premier perçage de clapet (11) dans sa face d'extrémité avant ; un premier clapet (14) ayant un diamètre plus petit que celui dudit deuxième perçage de clapet (8) et étant adapté pour fermer ledit premier perçage de clapet (11) de l'extérieur de celui-ci ; un deuxième clapet (20) monté dans ledit deuxième corps principal (4) et poussé par un deuxième ressort (19) pour fermer ledit deuxième perçage de clapet (8) de l'intérieur de ce dernier ; et un élément d'étanchéité annulaire (21) fixé à la face d'extrémité avant de l'un des éléments constitués par ledit siège de clapet (10) du premier corps principal (2) et par la portion d'extrémité avant du deuxième corps principal (4) pour former une zone d'étanchéité annulaire étanche dans un état accouplé dudit raccord, dans lequel ledit perçage intérieur (50) dudit premier corps principal (2) est divisé par un premier épaulement (53) en une première portion (51) qui communique avec ladite ouverture de raccordement (5) et une deuxième portion (52) ayant un diamètre intérieur plus petit que celui de ladite première portion, et la surface extérieure dudit siège de clapet (10) est divisée par un deuxième épaulement (10c) en une portion d'extrémité (10a) avant qui s'ajuste avec jeu dans ladite première portion (51) dudit perçage intérieur (50) et une portion de guidage arrière (10b) qui s'ajuste à coulissement dans ladite deuxième portion (52) dudit perçage intérieur, en formant ainsi une cavité d'air entre lesdits premier (53) et deuxième (10c) épaulements, caractérisé en ce que ladite première portion (51) du perçage intérieur (50) du premier corps principal a un diamètre intérieur supérieur au diamètre extérieur de ladite portion d'extrémité avant du deuxième corps principal (4) et ledit deuxième perçage de clapet (8) a un diamètre intérieur supérieur, dans une mesure correspondante, au diamètre extérieur dudit premier clapet (14), en admettant ainsi une excentricité entre lesdits premier et deuxième corps principaux au moment de leur accouplement.

2. Raccord de canalisation selon la revendication 1, caractérisé en ce que le diamètre intérieur de ladite deuxième portion (52) dudit perçage intérieur (50) est approximativement égal mais non inférieur au diamètre intérieur dudit élément d'étanchéité annulaire (21), et le diamètre intérieur dudit élément d'étanchéité (21) est approximativement égal au diamètre intérieur dudit premier perçage de clapet (11).

3. Raccord de canalisation selon la revendication 1 ou 2, caractérisé en ce qu'une bague (59) d'arrêt des poussières est insérée dans une fente entre la première portion (51) dudit perçage intérieur (50) et la portion d'extrémité avant (10a) dudit siège de clapet (10).

4. Raccord de canalisation selon la revendication 1, 2 ou 3, caractérisé en ce que ledit premier corps principal (2) comprend en outre un passage d'air (58) qui relie ladite cavité d'air à l'atmosphère extérieure, et un filtre à air (61) est disposé dans ledit passage (48).

5. Raccord de canalisation selon la revendication 3 ou 4, caractérisé en ce que ladite bague (59) d'arrêt des poussières est perméable à l'air.
